Europäisches Patentamt

European Patent Office

Office européen des brevets

(11) Veröffentlichungsnummer: **0 252 070**
**A2**

## (12) EUROPÄISCHE PATENTANMELDUNG

(21) Anmeldenummer: 87890153.7

(22) Anmeldetag: 03.07.87

(51) Int. Cl.⁴: **C 02 F 3/12**
**B 01 D 21/06**

(30) Priorität: 03.07.86 AT 1810/86

(43) Veröffentlichungstag der Anmeldung:
07.01.88 Patentblatt 88/01

(84) Benannte Vertragsstaaten:
AT BE CH DE ES FR GB GR IT LI LU NL SE

(71) Anmelder: **VOEST-ALPINE Aktiengesellschaft**
**Friedrichstrasse 4**
**A-1011 Wien (AT)**

(72) Erfinder: **Kroiss, Helmut, Dipl.-Ing.Dr.**
**Abelegasse 26/1/20**
**A-1160 Wien (AT)**

**Kornel, Jahn, Dipl.-Ing.**
**Seisgasse 14**
**A-1040 Wien (AT)**

(74) Vertreter: **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

(54) Vorrichtung zur aeroben Abwasserreinigung.

(57) Bei einer Vorrichtung zur aeroben Abwasserreinigung mit einem Rundbecken und einem den Boden des Rundbeckens räumenden Rundräumer zum Austragen von Schlämmen, wobei das Belebtschlammbecken (1) als Rundbecken mit einem Rundräumer (4) ausgebildet ist und das Nachklärbecken (2) als konzentrisch das Belebtschlammbecken (1) umgebender Ringraum ausgebildet ist und wobei der Boden (23) des Nachklärbeckens (2) höher als der Boden (25) des Belebtschlammbeckens (1) angeordnet ist und das Nachklärbecken (2) nahe seinem Boden über radiale Durchbrechungen (11) mit dem Belebtschlammbecken in Verbindung steht, ist auch im Nachklärbecken (2) ein Schlammräumer (5) angeordnet, welcher gleichachsig mit dem Schlammräumer (4) des Belebtschlammbeckens (1) zur Rotation antreibbar ist.

FIG. 1

**Beschreibung**

Vorrichtung zur aeroben Abwasserreinigung

Die Erfindung bezieht sich auf eine Vorrichtung zur aeroben Abwasserreinigung mit einem Rundbecken und einem den Boden des Rundbeckens räumenden Rundräumer zum Austragen von Schlämmen, wobei das Belebtschlammbecken als Rundbecken mit einem Rundräumer ausgebildet ist und das Nachklärbecken als konzentrisch das Belebtschlammbecken umgebender Ringraum ausgebildet ist und wobei der Boden des Nachklärbeckens höher als der Boden des Belebtschlammbeckens angeordnet ist und das Nachklärbecken nahe seinem Boden über radiale Durchbrechungen mit dem Belebtschlammbecken in Verbindung steht.

Eine Vorrichtung der eingangs genannten Art ist beispielsweise der DE-PS 11 36 946 zu entnehmen. Bei diesem bekannten Klärbecken ist im inneren Becken am Boden ein Räumer angeordnet, wobei die von einer Rührpumpe erzeugte Strömung als Antriebskraft für das Krählwerk mittels mehrerer schwimmender Prallflächen herangezogen wird. Das innere Becken wird von einem zweiten konzentrisch angeordneten Becken umgeben, welches einen geneigten Boden aufweist, so daß dort sich ansammelnder Schlamm über Öffnungen in das Hauptbecken gelangen kann. Nachteilig ist hiebei, daß bei geringer Strömung bzw. Bewegung im Außenbecken der Schlammaustrag nicht sichergestellt ist und ein Verstopfen der Schlammaustragsöffnungen möglich ist.

Weitere Einrichtungen zur aeroben Abwasserreinigung sind beispielsweise aus der DE-PS 926 900 und der DE-PS 676 090 zu entnehmen. Runde Absetzbehälter wurden in der Vergangenheit auch im Anschluß an Belebtschlammbecken eingesetzt. Es ist weiters bereits bekannt, das Belebtschlammverfahren in runden Belebungsbecken durchzuführen, wobei innerhalb des Belebungsbeckens durch entsprechende Luft- bzw. Sauerstoffeinleitung ein Absetzen von Schlamm vermieden wurde. Das Belebtschlammverfahren eignet sich besonders für die Reinigung von kommunalen und industriellen Abwässern und ist verfahrenstechnisch relativ einfach in Vorrichtungen unterschiedlicher Größe durchführbar. Bei kleinen Anlagen stellt die Überwachung der anfälligsten Teile einer solchen Anlage ein besonderes Problem dar, da diese nur stundenweise je Tag durchgeführt wird. Es hat sich gezeigt, daß bei kleinen nach dem Belebungsverfahren arbeitenden Anlagen Rechen- und Sandfang speziell bei Starkregen immer wieder Betriebsstörungen hervorrufen. Derartige Anlagen stellen darüberhinaus speziell im Sommer eine starke Geruchsbelästigung dar. Das Rechen- und Sandfanggut stellt eine Quelle von unangenehmen Umweltbelastungen dar, welche sich nicht in Geruchsbelastungen erschöpfen. Vielmehr sind auch die Vögel- und Rattenplage bei derartigen Anlagen mit Sandfängen ein bedeutender Nachteil.

Die Erfindung zielt nun darauf ab, eine Anlage der eingangs genannten Art zu schaffen, bei welcher das Rohabwasser bereits nach einem Schotterfang und einem Grobrechen direkt dem Belebungsbecken zugeführt werden kann, und eine möglichst kompakte, kleinbauende Einheit zu bilden, die in einfacher Weise zur Verringerung der Geruchsbelästigung überdacht werden kann. Weiters zielt die Erfindung darauf ab, den Schlamm sicher aus dem Nachklärbecken auszutragen. Zur Lösung dieser Aufgabe besteht die Erfindung im wesentlichen darin, daß auch im Nachklärbecken ein Schlammräumer angeordnet ist, welcher gleichachsig mit dem Schlammräumer des Belebtschlammbeckens zur Rotation antreibbar ist. Da das Belebtschlammbecken und auch das Nachklärbecken als Rundbecken mit einem Rundräumer ausgebildet sind, kann unmittelbar Rohabwasser ohne vorangehenden Sandfang und Feinrechen eingetragen werden, welches bei konventionellen Anlagen zu Ablagerungen im Belebungsbecken führen würde. Insbesondere bei Anlagen zur simultanen Stabilisierung des Schlammes, in denen die von der Belüftungseinrichtung erzeugte Turbulenz gering ist, stellt die erfindungsgemäße Ausbildung eine einfache Möglichkeit dar, abgesetzte Schwerstoffe mit Hilfe der drehbaren Räumer arme, an welchen mindestens ein Räumschild festgelegt ist, zu einem Sumpf zu transportieren, von wo sie abgesaugt werden können. Die Anordnung des Nachklärbeckens konzentrisch zum Belebtschlammbecken erlaubt es, die Anlage besonders kompakt zu bauen und bietet die Grundvoraussetzung für eine einfache Überdachung zum Zwecke der Verminderung der Geruchsbelästigung. Die erfindungsgemäße Anordnung, daß auch im Nachklärbecken ein Schlammräumer angeordnet ist, welcher gleichachsig mit dem Schlammräumer des Belebtschlammbeckens zur Rotation antreibbar ist, erlaubt eine wesentliche Vereinfachung bezüglich des Abtransportes des sich im Nachklärbecken absetzenden Schlammes, da ja für das Belebtschlammbecken schon ein Rundräumer vorgesehen ist. Auf diese Weise wird der Antrieb der Bodenräumer wesentlich rationeller gestaltet und es kann mit wesentlich kleinbauenden Aggregaten das Auslangen gefunden werden. Da der Boden des Nachklärbeckens höher als der Boden des Belebtschlammbeckens angeordnet ist und das Nachklärbecken nahe seinem Boden über radiale Durchbrechungen in der Wand des Belebtschlammbeckens mit dem Belebtschlammbecken in Verbindung steht, kann der sich am Boden des Nachklärbeckens ansammelnde Schlamm einfach über diese Durchbrechungen in das Belebtschlammbecken rückgeführt werden, so daß die Schlammrückführung besonders einfach bewerkstelligt werden kann.

Unterhalb des relativ zum Boden des Belebtschlammbeckens höheren Bodens des Nachklärbeckens verbleibt nun noch ein weiterer Raum, in dem zusätzliche Einrichtungen der Abwasserkläranlage untergebracht werden können, wobei das gemeinsame Dach der beiden erstgenannten Becken auch die zusätzlichen Einrichtungen in einfacher Weise gasdicht umschließt, wodurch die Geruchsbelästigung wesentlich herabgesetzt werden kann. In vorteilhafter Weise ist die Ausbildung hiefür so getroffen, daß unterhalb des Bodens des Nachklärbeckens ein zum Belebtschlammbecken konzentrischer Schlammsammel- bzw. Schlammstapelraum angeordnet ist, welcher mit dem Sumpf des Belebtschlammbeckens, insbesondere unter Zwischenschaltung einer Schlammpumpe verbunden ist. Der Schlammstapelraum kann hiebei gleichfalls belüftet sein und da die gesamte Anlage durch ein gemeinsames Dach abgedeckt werden kann, kann die gesamte Abluft über ein Geruchsfilter geleitet werden. In vorteilhafter Weise sind wenigstens im Belebtschlammbecken und im Schlammsammelraum, Belüftungseinrichtungen angeordnet und die den Belebtschlamm und den Schlamm im Sammelraum verlassenden Gase über eine Abluftreinigung, insbesondere ein Kompostfilter, geführt.

Eine besonders einfache Bauweise für den Antrieb und die Wartung des Antriebes für die Räumer läßt sich dadurch erzielen, daß der Antrieb für die Räumer an einer zur Rotationsachse der Räumer radial orientierten Plattform festgelegt ist. Hiebei kann mit Vorteil die Ausbildung so getroffen sein, daß die Räumschilde des Räumers im Nachklärbecken mit einem das Belebtschlammbecken diametral übergreifenden, drehbaren Arm verbunden sind.

Der Zulauf des Rohabwassers zum Belebtschlammbecken kann in einfacher Weise nahe dem Bodenräumer und vorzugsweise oberhalb des Bodenräumers münden.

Wie bereits erwähnt, ist es aufgrund der überaus kompakten Bauweise ohne weiteres möglich und vorteilhaft, das Belebtschlammbecken und die konzentrischen Räume mit einem gemeinsamen Dach zu versehen.

Im Belebtschlammbecken entsteht neben dem von den Räumern erfaßten Schwerstoffen auch Schwimmschlamm, für welchen mit Vorteil ein Schwimmschlammabscheider vorgesehen ist, wobei der Beckenrand des Belebtschlammbeckens mit Vorteil mit einer konzentrischen Leitwand mit größerem Durchmesser als der Beckenrand ausgestattet ist. Auf diese Weise gelangt das das Belebtschlammbecken verlassende Abwasser über den Überlauf bzw. das Gerinne in das Nachklärbecken.

Auch die Rückführung des im Nachklärbecken anfallenden Schlammes bzw. der Schwerstoffe in das Belebtschlammbecken erfolgt mit Vorteil so, daß eine Störung des Betriebes des Belebtschlammbeckens vermieden wird. Zu diesem Zweck ist die Ausbildung mit Vorteil so getroffen, daß innerhalb des Belebtschlammbeckens in oder unterhalb der Querschnittsebene des Bodens des Nachklärbeckens Leitflächen für den rückgeführten Schlamm bzw. die Schwerstoffe angeordnet sind. Mit Vorteil ist hiebei der Boden des Nachklärbeckens in Richtung zur Beckenachse nach unten geneigt, so daß der Austrag der Schwerstoffe in Richtung zu den Räumern des Belebtschlammbeckens erleichtert wird.

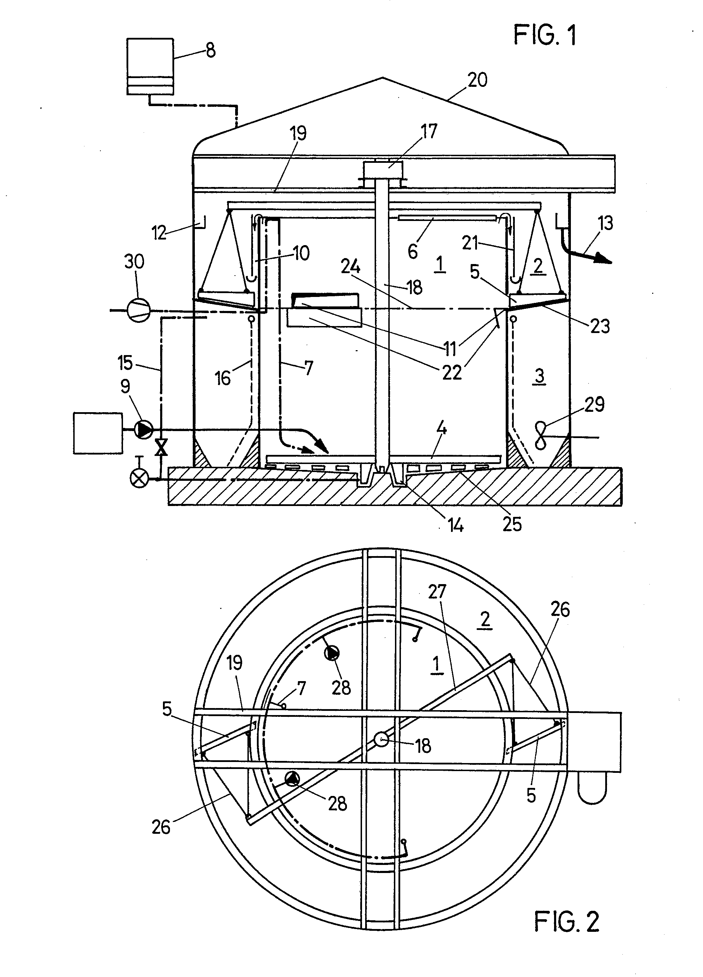

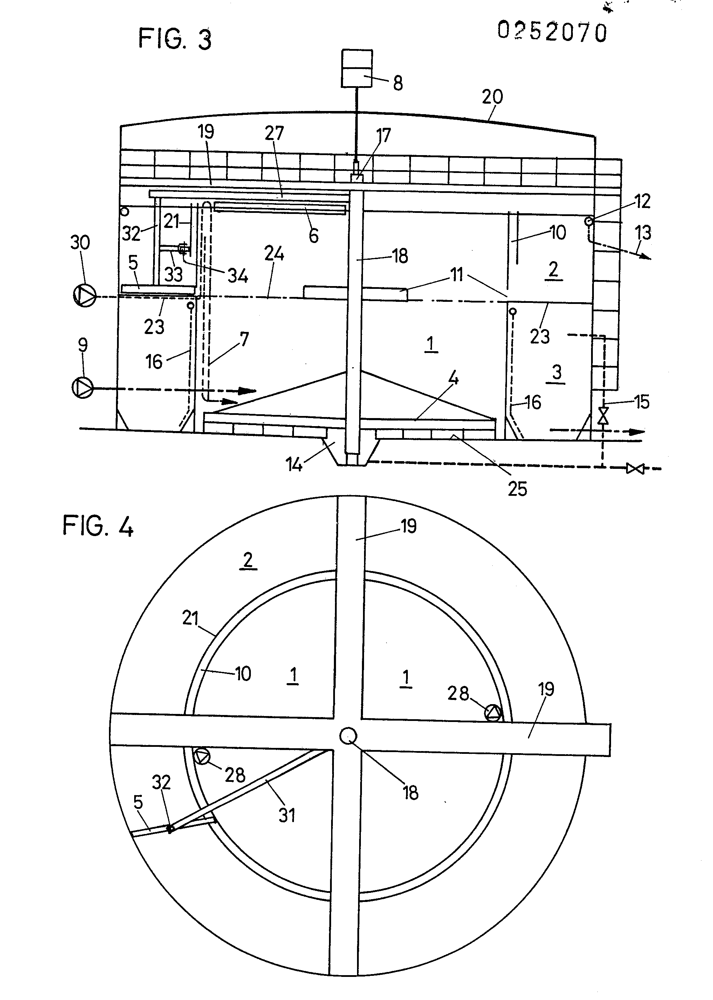

Die Erfindung wird nachfolgend anhand einer in der Zeichnung dargestellten Ausführungsform der Erfindung näher erläutert. In dieser zeigen Fig.1 einen schematischen Schnitt durch eine erfindungsgemäße Anlage, Fig.2 eine Draufsicht auf die Anlage nach Fig.1 bei abgenommenem Dach, Fig.3 eine abgewandelte Ausbildung in analoger Darstellung wie Fig.1 und Fig.4 eine Draufsicht auf die Anlage nach Fig.3 entsprechend der Fig.2.

In Fig.1 ist das Belebungsbecken mit 1 bezeichnet und als Rundbecken ausgebildet. Konzentrisch zu diesem Belebungsbecken ist ein als Ringraum ausgebildetes Nachklärbecken 2 angeordnet. Unterhalb dieses Nachklärbeckens 2 ist ein Schlämmstapelraum 3 vorgesehen. Innerhalb des Belebungsbeckens 1 befindet sich ein Bodenschlammräumer 4. Ein weiterer Schlammräumer 5 räumt den Bodenschlamm im konzentrisch zum Belebungsbecken 1 angeordneten Nachklärbecken 2.

Der im Belebungsbecken 1 anfallende Schwimmschlamm wird über Schwimmschlammräumer 6 abgeführt. Innerhalb des Belebungsbeckens ist eine Belüftungseinrichtung 7 schematisch durch die Leitungen angedeutet, an welche Düsen angeschlossen sind.

Die gesamte Abluft der Anlage nach Fig.1 wird über ein Kompostfilter 8, welches die Abluftreinigung darstellt, gereinigt.

Das Rohabwasser wird über eine Pumpe 9 in das Belebungsbecken 1 gepumpt. Die Durchmischung und Sauerstoffversorgung im Belebungsbecken erfolgt durch die mit 7 schematisch angedeutete Belüftungseinrichtung. Ein Gemisch aus gereinigtem Abwasser und Schlamm gelangt über ein Gerinne 10 am oberen Beckenrand in das konzentrische Nachklärbecken 2. Der sich im konzentrischen Nachklärbecken 2 absetzende Schlamm wird durch die Räumer 5 über Schlitze 11 in der Wand des Belebungsbeckens 1 in das Belebungsbecken 1 rückgeführt. Das gereinigte Abwasser fließt über eine weitere Rinne 12 oder ein gelochtes Sammelrohr in ein Ablaufrohr 13 aus dem Nachklärbecken ab.

Der Überschußschlamm bzw. die abgesetzten Schwerstoffe werden mit dem Bodenschlammräumer 4 im Belebungsbecken 1 zum Sumpf 14 gefördert, aus welchem sie über eine Leitung 15 und eine Pumpe In den Schlammstapelraum 3 gefördert werden. Im Schlammstapelraum 3 kann eine mit 16 angedeutete Belüftung mit Druckluft über am Umfang verteilte Belüfterrohre erfolgen.

Die Räumer 4 und 5 werden über eine zentrale Antriebseinrichtung 17 in Rotation versetzt, wobei eine zentrale Welle 18 vorgesehen ist, an welcher alle Räumer festgelegt sind. Dieser Antrieb 17 befindet sich im freien Raum zwischen dem Wasserspiegel und der Dachfläche auf einer Bedienungsbrücke bzw. Plattform 19.

Die gesamte Anlage ist durch ein Dach 20 überdacht und auf diese Weise gasdicht abgeschlossen.

An den Überlauf 10 aus dem Belebungsbecken 1 in das Nachklärbecken 2 schließt eine konzentrische Leitwand 21 zum Umlenken der Strömung an, so daß das überlaufende Abwasser die Sedimentation nicht behindert. Der obere Behälterrand des Belebungsbeckens kann radiale Durchbrechungen aufweisen, um die Abförderung von Schwimmschlamm nicht zu beeinträchtigen und tatsächlich gereinigtes Wasser in das Nachklärbecken 2 strömen zu lassen.

An der Innenseite des Belebungsbeckens 1 sind im Bereich der radialen Durchbrechungen 11 für die Rückführung von Schwerstoffen weitere Leiteinrichtungen 22 vorgesehen, welche im Belebungsbecken angeordnet sind und auf diese Weise bewirken, daß die Rückführung des im Nachklärbecken abgesetzten Schlammes durch aufsteigende Luftblasen nicht behindert wird. Der Boden 23 des Nachklärbeckens ist hiebei nach innen und unten geneigt und die Querschnittsebene der Durchtrittsschlitze mit 24 bezeichnet. Der Boden 23 des Nachklärbeckens liegt höher als der vom Rundräumer 4 bestrichene Boden 25 des Belebungsbeckens 1.

In der Darstellung nach Fig.2 sind die Bezugszeichen der Fig.1 beibehalten, wobei die über den Umfang des Belebungsbeckens verteilte Gaszuführungsdüsen des Belüftungssystems 7 schematisch angedeutet sind. Es sind weiters die Arme für die Räumer des Nachklärbeckens deutlicher sichtbar, wobei die Räumschilde 5 Zugglieder 26 mit den das Belebungsbecken 1 diametral übergreifenden Armen 27 verbunden sind. Die gemeinsame Antriebswelle ist wiederum mit 18 bezeichnet und ist mit dem in Fig.1 dargestellten Antrieb 17 verbunden.

Die Umwälzpumpen für die Belüftungseinrichtung 7 im Belebungsbecken sind als Tauchpumpen ausgebildet und mit 28 bezeichnet.

In Fig.1 ist innerhalb des Schlammstapelraumes 3 noch ein Mischer 29 ersichtlich und der Luftkompressor für die Belüftung des gestapelten Schlammes mit 30 bezeichnet.

Bei der Ausbildung nach Fig.3 und 4 ist der Boden 23 des Nachklärbeckens horizontal verlaufend und eben ausgebildet. Die Räumschilde 5 werden hier abweichend von der Ausbildung nach Fig.1 und 2 von einer an einem Arm 31 angelenkten, im wesentlichen vertikal angeordneten Schubstange 32 verbundenen Auslegerarm 33 getragen. Die Schubstange 32 ist um ihre Achse schwenkbar am Arm 31 angeschlossen und in ihrer Schwenklage über einen starr mit der Schubstange 32 und eine Rolle 34 an der Außenseite des Belebungsbeckens 1 bzw. der konzentrischen Leitwand 21 abgestützt.

**Patentansprüche**

1. Vorrichtung zur aeroben Abwasserreinigung mit einem Rundbecken und einem den Boden des Rundbeckens räumenden Rundräumer zum Austragen von Schlämmen, wobei das Belebtschlammbecken (1) als Rundbecken mit einem Rundräumer (4) ausgebildet ist und das Nachklärbecken (2) als konzentrisch das Belebtschlammbecken (1) umgebender Ringraum ausgebildet ist und wobei der Boden (23) des Nachklärbeckens (2) höher als der Boden (25) des Belebtschlammbeckens (1) angeordnet ist und das Nachklärbecken (2) nahe seinem Boden über radiale Durchbrechungen (11) mit dem Belebtschlammbecken in Verbindung steht, dadurch gekennzeichnet, daß auch im Nachklärbecken (2) ein Schlammräumer (5) angeordnet ist, welcher gleichachsig mit dem Schlammräumer (4) des Belebtschlammbeckens (1) zur Rotation antreibbar ist.

2. Vorrichtung nach Anspruch 1, dadurch gekennzeichnet, daß unterhalb des Bodens (23) des Nachklärbeckens (2) ein zum Belebtschlammbecken (1) konzentrischer Schlammsammel- bzw. Schlammstapelraum (3) angeordnet ist, welcher mit dem Sumpf (14) des Belebtschlammbeckens (1), insbesondere unter Zwischenschaltung einer Schlammpumpe, verbunden ist.

3. Vorrichtung nach Anspruch 1 oder 2, dadurch gekennzeichnet, daß in dem Belebtschlammbecken (1) und im Schlammsammelraum (3) Belüftungseinrichtungen (7,16) angeordnet sind und daß die den Belebtschlamm und den Schlamm im Sammelraum verlassenden Gase über eine Abluftreinigung, insbesondere ein Kompostfilter (8), geführt sind.

4. Vorrichtung nach Anspruch 1, 2 oder 3, dadurch gekennzeichnet, daß der Antrieb (17) für die Räumer (4,5,6) an einer zur Rotationsachse (18) der Räumer radial orientierten Plattform (19) festgelegt ist.

5. Vorrichtung nach einem der Ansprüche 1 bis 4, dadurch gekennzeichnet, daß die Räumschilde des Räumers (5) im Nachklärbecken (2) mit einem das Belebtschlammbecken (1) diametral übergreifenden drehbaren Arm (27) verbunden sind.

6. Vorrichtung nach einem der Ansprüche 1 bis 5, dadurch gekennzeichnet, daß der Zulauf zum Belebtschlammbecken (1) nahe dem Bodenräumer (4), vorzugsweise oberhalb des Bodenräumers, mündet.

7. Vorrichtung nach einem der Ansprüche 1 bis 6, dadurch gekennzeichnet, daß das Belebtschlammbecken (1) und die konzentrischen Räume (2,3) mit einem gemeinsamen Dach versehen sind.

8. Vorrichtung nach einem der Ansprüche 1 bis 7, dadurch gekennzeichnet, daß das Belebtschlammbecken (1) einen Schwimmschlammabscheider (6) aufweist und daß der Beckenrand eine konzentrische Leitwand (21) mit größerem Durchmesser als der Beckenrand aufweist.

9. Vorrichtung nach einem der Ansprüche 1 bis 8, dadurch gekennzeichnet, daß innerhalb des Belebtschlammbeckens (1) in oder unterhalb der Querschnittsebene des Bodens (23) des Nachklärbeckens (2) Leitflächen (22) für den rückgeführten Schlamm angeordnet sind.

10. Vorrichtung nach einem der Ansprüche 1 bis 9, dadurch gekennzeichnet, daß der Boden (23) des Nachklärbeckens (2) in Richtung zur Beckenachse nach unten geneigt verläuft.

0252070

FIG. 1

FIG. 2

FIG. 3

0252070

FIG. 4